# EUROPEAN PATENT SPECIFICATION

(11) **EP 0 459 286 B1**
(45) Date of publication and mention of the grant of the patent: **23.11.1994**
(21) Application number: 91108254.3
(22) Date of filing: 22.05.1991
(51) Int. Cl.: B60R 16/04, B62K 11/00

(54) **Battery holding device of scooter-type vehicle**
Batteriehaltevorrichtung für ein Fahrzeug des Motorrolertyps
Dispositif de support de batterie pour véhicule du type scooter

(30) Priority: 23.05.1990 JP 53099/90; 29.10.1990 JP 112057/90
(43) Date of publication of application: 04.12.1991
(73) Proprietor: SUZUKI KABUSHIKI KAISHA, Hamamatsu-Shi, Shizuoka-Ken (JP)
(72) Inventor: Hakamata, Osamu, Hamakita-shi, Shizuoka-ken (JP); Mizutani, Kazuhiko, Hamamatsu-shi, Shizuoka-ken (JP); Ishii, Keiichirou, Hamamatsu-shi, Shizuoka-ken (JP)
(74) Representative: Klunker . Schmitt-Nilson . Hirsch

(56) References cited:
- FR-A- 2 532 897
- GB-A- 2 183 081
- PATENT ABSTRACTS OF JAPAN vol. 10, no. 265 (M-515)(2321) 10 September 1986; & JP-A-61 089145
- PATENT ABSTRACTS OF JAPAN vol. 09, no. 231 (M-414)(1954) 18 September 1985; & JP-A-60 088660

## Description

### BACKGROUND OF THE INVENTION

The present invention relates to a battery holding device, according to the pre-characterizing part of claim 1. A device of this type is known from FR-A-2 532 897.

In a scooter-type vehicle such as motorcycle, a vehicle body has a central portion downwardly curved thereby to form a flat floor step portion. At the front portion of the central portion of the vehicle body, a front fork is covered by a leg shield from the lower portion of a handle, and the rear portion thereof is extended upwardly to constitute a rear body on which a seat is arranged. This is a basic layout of the scooter-type vehicle.

With such scooter-type vehicle, a battery is usually located so as to extend upwardly behind the rear end of the floor step continuous to the rear body. However, in this portion, a unit-swing-type engine is generally arranged, thus being narrow in space for the arrangement of the battery. In addition, in this layout, the battery is usually arranged with no shield or cover and, accordingly, there may be liably caused battery trouble by the splashing of water or mud during the running of the vehicle.

Furthermore, electrical equipments such as a starter relay and an electrical fuse in association with the battery are also arranged near the battery and the splashing of the water and mud to these electrical equipments also causes significant problem. The prior art battery holding device disclosed in the above-identifical FR-A-2 532 897 can be disposed also at positions which cannot easily accessed to. To this end, the battery is hermetically sealed and does not require any refillment of water during the lifetime thereof. One possible location of the plate like battery holder is below the step board. The plate like battery holder rests on a horizontal portion of the downtube and a lateral bracket member, which supports the outer region of the step board.

The object of the present invention is to provide a battery holding device of a scooter-type vehicle arranged at a lower portion of a vehicle body by utilizing a dead space and capable of allowing access to the battery. This object can be achieved according to the present invention by the features of claim 1. The battery box is subjected to a water-proof treatment.

In the battery box there can be disposed an electric equipment such as starter relay together with the battery.

In a preferred embodiment, the battery box is divided into two compartments, one being for accommodating the battery and another being for accommodating a plurality of electric equipments, by a partition plate formed integrally with an inner wall of the battery box.

According to the battery holding device of the present invention of the characters described above, since the battery is located in a space, conventionally a dead space, below the floor step portion of the vehicle body in a hermetically sealed manner in the battery box. The battery is prevented from being suffered from splashing of water or mud. Since the battery box is disposed in the space which is conventionally a dead space, so that a space in which a battery is conventionally arranged can be utilized for other purpose or arrangement of other equipments, thus being effective in utilization of the space. The battery box having relatively heavy weight is located at the lower portion of the vehicle body, so that the running stability of the vehicle can be surely maintained.

Furthermore, the electric equipment such as starter relay can be accommodated in the battery box together with the battery, so that the electric equipment can be stably maintained and the maintenance performance can be also improved.

### BRIEF DESCRIPTION OF THE DRAWINGS

For a better understanding of the present invention and to show how the same is carried out, reference is first made, by way of preferred embodiments, to the accompanying drawings, in which:
Fig. 1 is a general side view of a scooter-type motorcycle to which one embodiment of a battery holding device according to the present invention is applied;
Fig. 2 is a disassembled perspective view of a floor step portion of the motorcycle to which the battery holding device of the present invention is secured;
Fig. 3 is a plan view of the battery holding device of one embodiment of Fig. 1;
Fig. 4 is a front view of the battery holding device of Fig. 3;
Fig. 5 is a side view of the battery holding device of Fig. 3;
Fig. 6 is a general side view of a scooter-type motorcycle to which a battery holding device according to another embodiment of the present invention is applied;
Fig. 7 is a plan view of the battery holding device of another embodiment of Fig. 6;
Fig. 8 is a front view of the battery holding device of Fig. 7; and
Fig. 9 is a side view of the battery holding device of Fig. 7.

### DESCRIPTION OF THE PREFERRED EMBODIMENTS

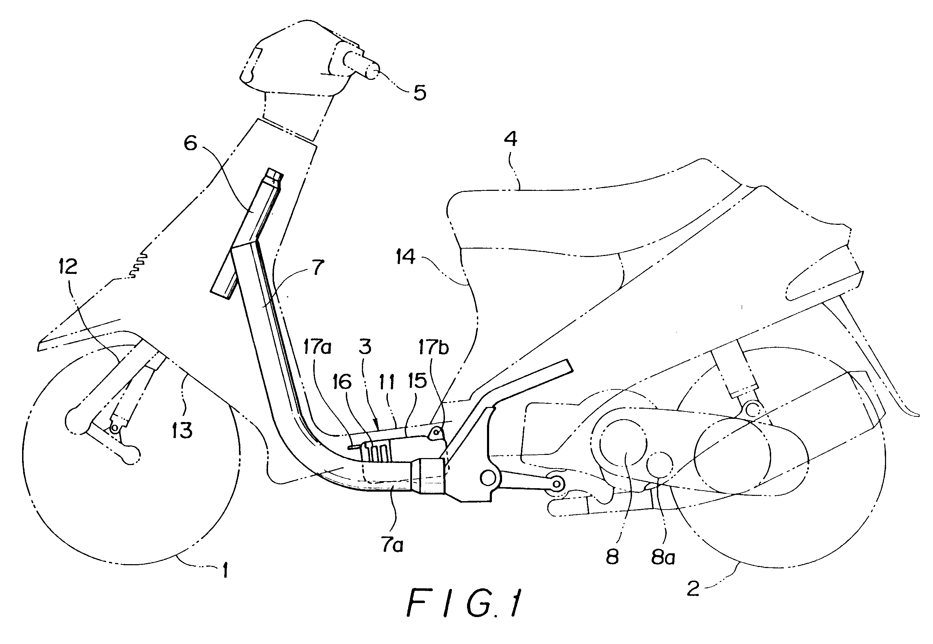

Fig. 1 is an illustration of a side view of a scooter-type motorcycle to which the present invention is applicable.

Referring to Fig. 1, the scooter-type motorcycle is provided with a vehicle body supported by a front wheel 1 and a rear wheel 2, and the central portion of the vehicle body is downwardly frontwardly curved to form a flat floor step portion 3. The rear portion of the vehicle body extends upwardly from the rear side of the floor step portion 3 and a seat 4 is disposed to the rear portion. A rider of the scooter-type motorcycle sits on the seat 4 with legs being on the floor step portion 3 and hands gripping a handle 5.

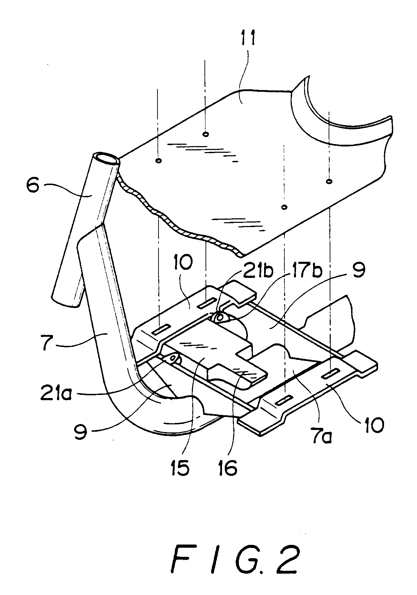

Fig. 2 shows a part of a frame structure of the scooter-type motorcycle of Fig. 1, in which one down tube 7 connected to a head pipe 6 leads downwardly and then extends rearwardly. A unit-swing-type engine unit 8 is pivotally supported by the rear end portion of the down tube 7 as shown in Fig. 1 and a starter motor 8a is disposed for the engine unit 8. The down tube 7 is provided with a horizontal portion 7a on both the sides of which are arranged step board base plates 10 through a central attachment plate 9. A step board 11, generally made of a synthetic resin material, is applied to the base plates 10 thereby to form the flat floor step portion 3.

The front portion of the floor step portion 3 is continuous to a leg shield 13 covering the head pipe 6 and a front fork 12, and the rear portion of the floor step portion 3 is continuous to a rear body 14 extending upwardly, on which the seat 4 is rested. The step board 11 may be formed as an extension of the leg shield 13.

A battery box 15 is arranged on one side below the step board 11.

It is preferred that the battery box 15 is formed of a water-proof material, such as synthetic resin or the outer surface of the battery box is subjected to a water-proof treatment.

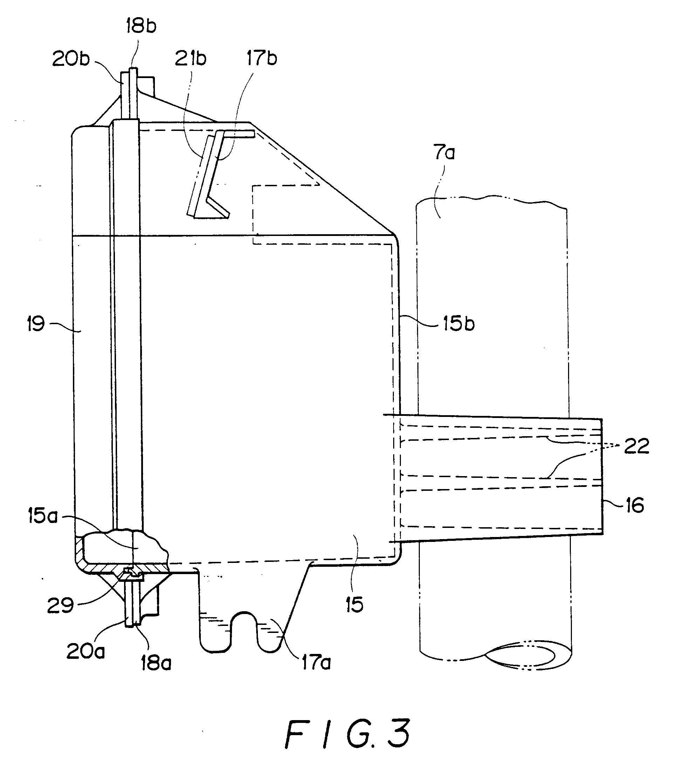

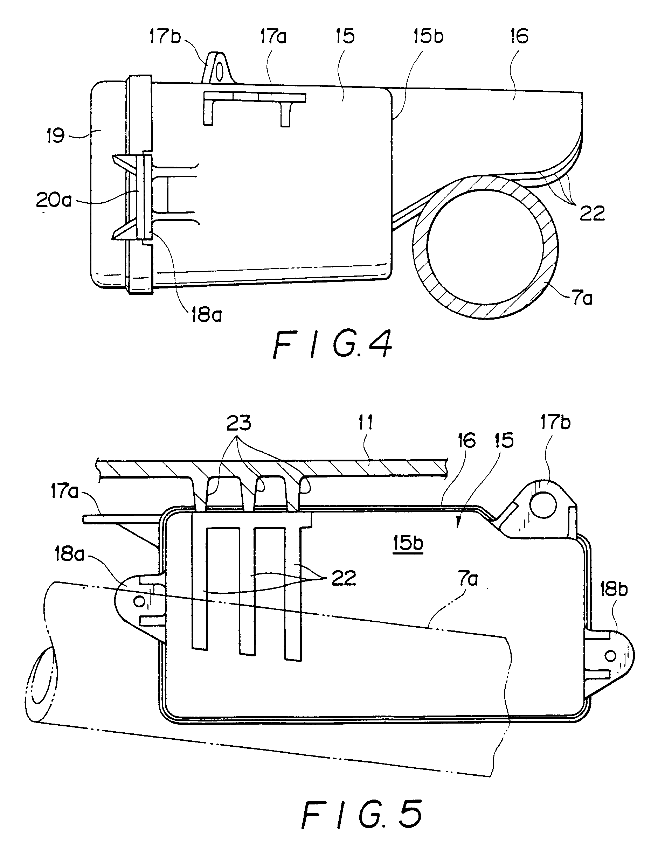

Referring to Figs. 3 to 5 showing the battery box 15, the battery box 15 is provided with an opening 15a formed to the outside surface of the battery box 15 and a support arm 16 is integrally formed to the inside surface 15b thereof so as to extend inside. Bracket pieces 17a and 17b are formed to the upper end portion of the outside surface and clamp members 18a and 18b are also formed around the opening 15a. A cap 19 is applied to the opening 15a and the cap 19 is clamped by the engagement of clamping pieces 20a and 20b formed as flanges to the peripheral edge of the cap 19 with the clamp members 18a and 18b.

The support arm 16 is mounted on a rearwardly extending portion 7a of the down tube 7 and the bracket pieces 17a and 17b are fastened to bracket pieces 21a and 21b, respectively, formed to the attachment plate 9 and the step board base plates 10, whereby the battery box 15 is fixed. Accordingly, the the battery box 15 is disposed below the step board 11 in a space which is not utilized in the conventional scooter-type motorcycle as dead space.

A battery and associated electrical equipments such as a starter relay are accommodated in the battery box 15 and hermetically sealed by the cap 19, which is positioned to the transversely outside of the vehicle body. Accordingly, the battery can be easily accommodated into or taken out from the battery box 15 by removing the cap 19 from the outside of the vehicle body.

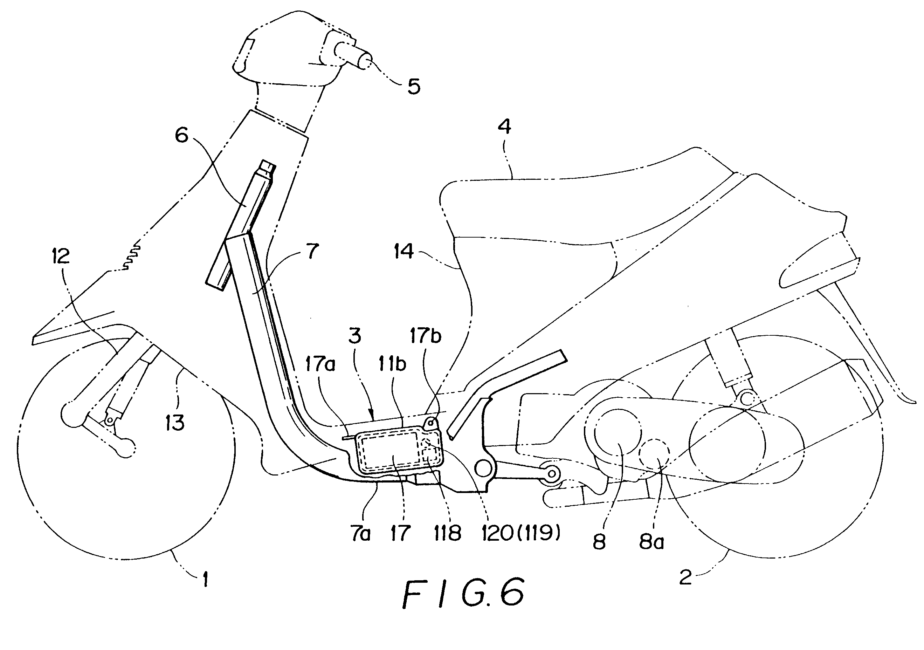

As best shown in Fig. 5, the support arm 16 has an upper, as viewed, flat surface and a lower surface on which are formed a plurality of ribs 22 extending substantially perpendicular to the longitudinal axis of the down tube portion 7a so that the lower edges of the ribs 22 abut against the down tube portion 7a.

Furthermore, as shown in Fig. 5, a plurality of ribs 23 are formed on the back surface of the step board 11 so as to extend downwardly such that the front ends of the ribs 23 abut against the upper surface of the support arm 16. According to such arrangement, the central portion of the step board 11 is carried by the down tube portion 7a through the support arm 16 to thereby reinforce the step board 11 made of a synthetic resin, for example, and prevent the deflection thereof which may be caused by the weight of the legs rested on the floor step portion 3.

A rubber made packing 29 may be embedded in the peripheral edge portion of the cap 19 to improve the sealing performance at a time of closing the cap 19.

As described hereinbefore, according to this embodiment of the present invention, since the battery box 15 is held below the floor step portion 3 which is per se positioned at the lower portion of the vehicle body, the gravity center of the vehicle body can be set to a lower portion thereof, thus the scooter-type motorcycle being maintained stably and increasing the running stability thereof. Moreover, the battery is accommodated in the battery box 15, so that the battery itself can be protected from the splashing of water or mud. The battery can be easily accommodated into and taken out from the battery box 15 from the outer side portion of the vehicle body with ease, thus improving the maintenance performance.

In addition, since the support arm 16 is rested to the down tube portion 7a, numbers of the parts or equipments for fixing the support arm to the frame can be reduced as well as for reinforcing the step board 11. Since the battery is arranged near the starter of the engine, harnesses can be shortened and since the starter relay can be accommodated at the same time of the accommodation of the battery, the relay is arranged between a starter motor and the battery, thus improving the motor efficiency and starting performance.

Another preferred embodiment of the present invention will be described hereunder with reference to Figs. 6 to 9, in which like reference numerals are added to elements or portions corresponding to those described with reference to the aforementioned embodiment and the detailed explanation thereof is now omitted herein.

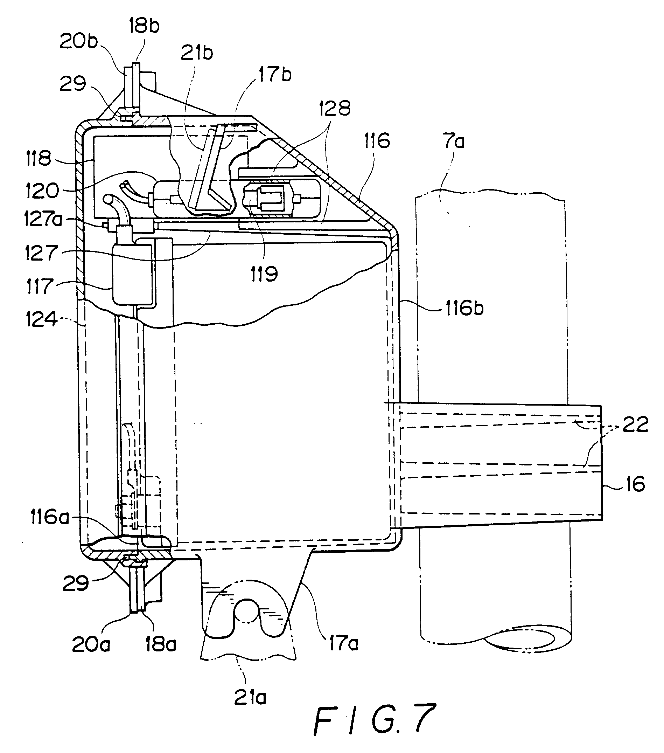

Referring to Fig. 6 showing the illustration of a scootor-type motorcycle of the type substantially identical to that of Fig. 1, in which a battery box 116 according to another embodiment of the present invention is arranged below the floor step portion 3. The battery box 116 is provided with an opening 116a formed to the outside surface of the battery box 116 and a support arm 16 is integrally formed with the inside surface 116b thereof so as to extend inside. Bracket pieces 17a and 17b are formed to the upper end portion of the outside surface and clamp members 18a and 18b are also formed around the opening 116a. The battery box 116 is secured in the manner that the support arm 16 is mounted on the down tube portion 7a and the bracket pieces 17a and 17b are connected to bracket pieces 126a and 126b (Fig. 7) formed to the attachment plate 9 and the step board 11.

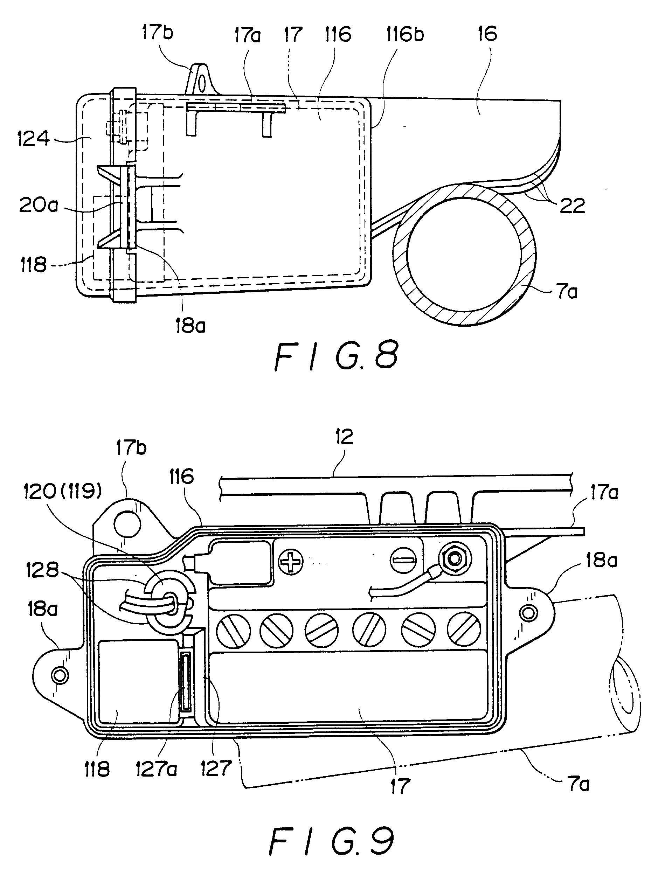

According to this embodiment, as shown in Figs. 7 and 8, the interior of the battery box 116 is separated into two compartments in the longitudinal direction, in a state shown in Fig. 6, of the vehicle body by a partition plate 127 formed integrally with the body of the battery box 116. A battery 117 is accommodated in the front, i.e. front wheel side, compartment and a starter relay 118 is accommodated in the rear, i.e. engine unit or rear wheel side, compartment. The front end of the partition plate 127 is formed as a flat projection 127a which is engaged with a hole, not shown, formed to the starter relay 118 to secure the same to the partition plate 127. In the rear compartment, a fuse holder 128 is also disposed on the side surface of the partition plate 127 and integrally with the body of the battery box 116. The fuse holder 128 comprises two parts, each in C-shape, facing each other, and a fuse box 120 in which a fuse 119 is accommodated is plugged tightly into the fuse holder 128.

The battery box 116 of this embodiment is also closed hermetically by a cap 124 and the battery box 116 is also arranged in the vehicle body so that the cap 124 is directed to the transverse side of the vehicle body thereby to make ensure the easy accommodation and take-out of the battery 117, the starter relay 118 and the fuse box 120 together or separately.

A rubber made packing 29 may be embedded in the peripheral edge portion of the cap 124 to improve the sealing performance at a time of closing the cap 124.

According to this embodiment, in addition to the constructional effects described with reference to the former embodiment, the following advantageous effects can be achieved. Namely, since the battery, the starter relay and the fuse are compactly assembled in the battery box, the length of wires connecting these electrical equipments can be made short, thus effectively reducing the electric resistance and improving the maintenance performance. The total weight can be also reduced. Moreover, since the battery relatively having a heavy weight is disposed at the lowest portion of the vehicle body, the center of gravity of the vehicle itself is set to a low position, thus improving the running stability of the vehicle.

## Claims

1. A battery holding device of a scooter-type vehicle in which a step board (11) is laid on a down tube (7, 7a) extending downwardly and then rearwardly from a head pipe (6) and the step board (11) disposed on both sides of the down tube (7, 7a) and a floor step portion (3) is formed on the step board (11) at a low portion of a vehicle body between a handle (5) and a seat (4) on which a rider sits, and a battery-holder (15, 116) to accommodate a battery (117) is arranged on the side of the down tube (7, 7a) below the step board (11),
**characterized in that** the battery holder comprises a box (15,16) provided with an opening (15a, 16a) which is covered by a cap means (19, 24) facing transversely outside of the vehicle body, and the battery box (15) is also provided with a support arm (16) extending inwardly to the down tube (7, 7a), the support arm (16) has a lower portion (22) which abuts on the down tube (7, 7a) and the support arm (16) is also provided with a flat upper portion so as to carry the bottom central portion (23) of the step board (11).

2. The battery holding device according to claim 1, wherein the lower portion of the support arm (16) is provided with a plurality of ribs (22) extending in a direction in a plane substantially perpendicular to the longitudinal axis of the down tube (7a).

3. The battery holding device according to claim 1 or 2, wherein a plurality of ribs (22) are formed on the bottom central portion of the step board (11) so that the downward extending ends of the ribs (23) abut against the flat upper portion of the support arm (16).

4. The battery holding device according to claim 1, wherein the battery box (15, 16) is subjected to a water-proof treatment.

5. The battery holding device according to claim 1, wherein the cap means (19) is provided with a packing (29) for hermetically sealing the opening (15a) of the battery box.

6. The battery holding device according to claim 1, wherein an electric equipment (118 - 120, 128) is disposed in the battery box (116) together with the battery (117).

7. The battery holding device according to claim 6, wherein the electric equipment (118 - 120, 128) is a starter relay (118).

8. The battery holding device according to claim 1, wherein the battery box (116) is divided into two compartments, one being for accommodating the battery (117) and another being for accommodating a plurality of electric equipments (128, 119), by a partition plate (127) formed integrally with an inner wall of the battery box (116).

9. The battery holding device according to claim 8, wherein the electric equipments (118 - 120, 128) are starter relay (118) and a fuse means (119, 120, 128) and wherein the starter relay (118) is secured to the partition plate (127) and the fuse means (119 - 120, 128) comprises a fuse holder (128) formed integrally formed with the battery box (116) and a fuse (119, 120) to be plugged into the fuse holder (128).

## Patentansprüche

1. Batteriehaltevorrichtung für ein Motortollerfahrzeug, bei dem ein Trittbrett (11) auf einem Abwartsrohr (7, 7a) liegt, welches sich von einem Kopfrohr (6) aus nach unten und dann nach hinten erstreckt, wobei das Trittbrett (11) auf beiden Seitens des Abwärtsrohrs (7, 7a) angeordnet ist und an dem Trittbrett (11) an einem unteren Abschnitt der Fahrzeugkarosserie zwischen einem Handgriff (5) und einem Fahrersitz (4) ein Boden-Trittabschnitt (3) ausgebildet ist, wobei an der Seite des Abwärtsrohrs (7, 7a) unterhalb des Trittbretts (11) ein Batteriehalter (15, 116) zur Aufnahme einer Batterie (117) angeordnet ist,
**dadurch gekennzeichnet,** daß der Batteriehalter einen Kasten (15, 16) aufweist, der eine von einer Deckeleinrichtung (19, 24) bedeckte Öffnung (15a, 16a) aufweist, die bezüglich der Fahrzeugkarrosserie quer nach außen weist, und der Kasten (15) außerdem mit einem Tragarm (16) ausgestattet ist, welcher sich nach innen zu dem Abwärtsrohr (7, 7a) hin erstreckt, und der einen unteren Abschnitt (22) aufweist, der an dem Abwärtsrohr (7, 7a) anliegt, wobei der Tragarm (16) außerdem mit einem flachen oberen Abschnitt ausgestattet ist, um den unteren Mittelabschnitt (23) des Trittbretts (11) zu tragen.

2. Batteriehaltevorrichtung nach Anspruch 1, bei der der untere Abschnitt des Tragarms (16) mit mehreren Rippen (22) ausgestattet ist, die sich in einer Richtung in einer Ebene etwa senkrecht zur Längsachse des Abwärtsrohrs (7a) erstrecken.

3. Batteriehaltevorrichtung nach Anspruch 1 oder 2, bei der eine Mehrzahl von Rippen (23) am unteren Mittelabschnitt des Trittbretts (11) angeformt sind, so daß die sich nach unten erstreckenden Enden der Rippen (23) gegen den flachen oberen Abschnitt des Tragarms (16) anliegen.

4. Batteriehaltevorrichtung nach Anspruch 1, bei der der Batteriekasten (15, 16) einer Wasserabdichtungsbehandlung unterzogen ist.

5. Batteriehaltevorrichtung nach Anspruch 1, bei der die Deckeleinrichtung (19) mit einer Packung (29) zum hermetischen Abdichten der Öffnung (15a) des Batteriekastens ausgestattet ist.

6. Batteriehaltevorrichtung nach Anspruch 1, bei der zusammen mit der Batterie (117) in dem Batteriekasten (116) eine elektrische Anlage (118 - 120, 128) angeordnet ist.

7. Batteriehaltevorrichtung nach Anspruch 6, bei der die elektrische Anlage (118 - 120, 128) ein Anlasser-Relais (118) ist.

8. Batteriehaltevorrichtung nach Anspruch 1, bei der der Batteriekasten (116) durch eine einstückig mit einer Innenwand des Batteriekastens (116) ausgebildete Trennplatte (127) in zwei Abteile unterteilt ist, von denen das eine zur Aufnahme der Batterie (117) und das andere zur Aufnahme mehrerer elektrischer Anlagenteile (128, 119) dient.

9. Batteriehaltevorrichtung nach Anspruch 8, bei der die elektrischen Anlagenteile (118 - 120, 128) ein Starter-Relais (118) und eine Sicherungseinrichtung (119, 120, 128) sind, und das Starter-Relais (118) an der Trennplatte (127) befestigt ist, wahrend die Sicherungseinrichtung (119 - 120, 128) einen Sicherungshalter (128), der einstückig mit dem Batteriekasten (116) ausgebildet ist, und eine in den Batteriehalter (128) einsteckbare Sicherung (119, 120) aufweist.

## Revendications

1. Dispositif de support de batterie d'un véhicule du type scooter, dans lequel un marchepied (11) est posé sur une boucle inférieure (7, 7a) s'étendant vers le bas et ensuite vers l'arrière depuis un tuyau de tête (6), le marchepied (11) étant disposé des deux côtés de la boucle inférieure (7, 7a), et une partie repose-pieds (3) est formée sur le marchepied (11), sur une partie basse d'un chassis de véhicule, entre une poignée (5) et un siège (4) sur lequel s'assied un conducteur, et un support ou boîtier de batterie (15, 116) servant à loger une batterie (117) est disposé sur le côté de la boucle inférieure (7, 7a) qui est situé au-dessous du marchepied (11),
caractérisé en ce que le support de batterie comprend un boîtier ou support (15, 16) pourvu d'une ouverture (15a, 16a) qui est recouverte par un moyen formant couvercle (19, 24) tourné transversalement vers l'extérieur du chassis de véhicule, et le support de batterie (15) est également pourvu d'un bras de support (16) s'étendant vers l'intérieur, vers la boucle inférieure (7, 7a), le bras de support (16) présente une partie inférieure (22) qui vient en butée contre la boucle inférieure (7, 7a) et le bras de support (16) est également pourvu d'une partie supérieure plane, de manière à supporter la partie centrale inférieure (23) du marchepied (11).

2. Dispositif de support de batterie selon la revendication 1, dans lequel la partie inférieure du bras de support (16) est pourvue d'une pluralité de nervures (22) s'étendant dans une direction comprise dans un plan pratiquement perpendiculaire à l'axe longitudinal de la boucle inférieure (7a).

3. Dispositif de support de batterie selon la revendication 1 ou 2, dans lequel la pluralité de nervures (22) est formée sur la partie centrale inférieure du marchepied (11), de manière que les extrémités s'étendant vers le bas des nervures (23) viennent en butée contre la partie supérieure plane du bras de support (16).

4. Dispositif de support de batterie selon la revendication 1, dans lequel le boîtier de batterie (15, 15) est soumis à un traitement d'étanchement à l'eau.

5. Dispositif de support de batterie selon la revendication 1, dans lequel le moyen formant couvercle (19) est pourvu d'une garniture (29) servant à sceller hermétiquement l'ouverture (15a) du boîtier de batterie.

6. Dispositif de support de batterie selon la revendication 1, dans lequel un équipement électrique (118-120, 128) est disposé dans le boîtier de batterie (116), conjointement avec la batterie (117).

7. Dispositif de support de batterie selon la revendication 6, dans lequel l'équipement électrique (118-120, 128) est un relais de démarreur (118).

8. Dispositif de support de batterie selon la revendication 1, dans lequel le boîtier de batterie (116) est divisé en deux compartiments, l'un étant destiné à loger la batterie (117) et un autre à loger une pluralité d'équipements électriques (128, 119), au moyen d'une plaque de séparation (127) formée d'un seul tenant avec une paroi intérieure du boîtier de batterie (116).

9. Dispositif de support de batterie selon la revendication 8, dans lequel les équipements électriques (118-120, 128) sont un relais de démarreur (118) et des moyens fusibles (119, 120, 128) et dans lequel le relais de démarreur (118) est fixé à la plaque de séparation (127) et le moyen fusible (119-120, 128) comprend un support de fusible (128) réalisé d'un seul tenant avec le boîtier de batterie (116) et un fusible (119, 120) destiné à être enfiché dans le support de fusible (128).
